**Europäisches Patentamt**

**European Patent Office**

**Office européen des brevets**

(19)

(11) Veröffentlichungsnummer: **0 195 037**
**B1**

# (12) EUROPÄISCHE PATENTSCHRIFT

(45) Veröffentlichungstag der Patentschrift:
**13.01.88**

(51) Int. Cl.⁴: **B 60 N 1/12**

(21) Anmeldenummer: **85904603.9**

(22) Anmeldetag: **11.09.85**

(86) Internationale Anmeldenummer:
**PCT/DE 85/00317**

(87) Internationale Veröffentlichungsnummer:
**WO 86/01778 (27.03.86 Gazette 86/07)**

(54) **SICHERHEITSSITZ ZUR BEFÖRDERUNG VON SÄUGLINGEN UND KLEINSTKINDERN IN FAHRZEUGEN.**

(30) Priorität: **13.09.84 DE 8427054 U**
**22.02.85 DE 3506122**

(43) Veröffentlichungstag der Anmeldung:
**24.09.86 Patentblatt 86/39**

(45) Bekanntmachung des Hinweises auf die Patenterteilung:
**13.01.88 Patentblatt 88/2**

(84) Benannte Vertragsstaaten:
**AT BE CH DE FR GB IT LI LU NL SE**

(56) Entgegenhaltungen:
**FR-A-2 323 357**
**FR-A-2 395 167**
**FR-A-2 553 985**
**US-A-3 331 632**

(73) Patentinhaber: **FRANKONIA KINDERAUSSTATTUNGEN GMBH & CO. KG, Nordstrasse 33, D-5160 Düren (DE)**

(72) Erfinder: **SCHRÄDER, Margarete, Guttenbergstr. 5, D-8654 Marktleugast (DE)**

(74) Vertreter: **Tergau, Enno, Patentanwälte Tergau & Pohl Postfach 11 93 47 Hefnersplatz 3, D-8500 Nürnberg 11 (DE)**

## Beschreibung

Die Erfindung betrifft einen Sicherheitssitz der im Oberbegriff des Anspruches 1 näher bezeichneten Art.

Sogenannte Autosicherheitssitze für Kleinstkinder sind in der herkömmlichen Art im Handel erhältlich. Sie weisen in der Regel eine ausgepolsterte Sitzschale auf, die in einem Haltegestell schwenkbar und zwischen einer aufrechten Sitz- und einer waagrechten Liegestellung in mehreren Schwenkstellungen arretierbar ist. In den beiden Seitenteilen der Sitzwanne liegt jeweils ein Schwenklager, in die eine druckknopfbetätigte Arretiersperre integriert ist. Dadurch ergibt sich für die Sperrwirkung ein nur sehr kurzer Hebelarm zwischen Drehpunkt und Verrastglied.

Zur Befestigung der herkömmlichen Sicherheitssitze enthalten diese in ihren beiden Armlehnen eine U-förmige Durchbrechung. Unter in beiden Lehnen stehenbleibende Laschen kann der Beckenteil eines Automatik-Dreipunkt-Gurtes bzw. ein Beckengurt gezogen werden. Diese Art von Gurtführung hat den Nachteil, daß der Sicherheitssitz immer nur in einer Richtung, beispielsweise gegen die Fahrtrichtung stehend, sicher fixiert werden kann.

Da zur Neigungsverstellung des Sitzes beide Arretiersperren gleichzeitig mittels Druckknopfbetätigung gelöst werden müssen, ist dazu immer eine beidhändige Bedienung nötig. Außerdem ist ein Verstellen in Einbauposition nur schwer möglich, da entweder Fuß- oder Kopfende der Sitzschale am Fahrzeugpolster anliegen. Eine Verstellung wird weiterhin durch die Tatsache erschwert, daß durch den räumlichen Abstand und dem damit wirksam werdenden Hebelarm zwischen Drehpunkt und der Lage der Gurtführungen eine leichtgängige Schwenkung des Sitzes behindert wird.

Aufgabe der vorliegenden Erfindung ist es, einen Sicherheitssitz zur Beförderung von Säuglingen und Kleinstkindern in Fahrzeugen zu schaffen, der mit besonderen Sicherheitsmerkmalen für den Transport ausgerüstet ist und zudem eine hohe Bedienungsfreundlichkeit aufweist.

Diese Aufgabe ist gemäß dem kennzeichnenden Merkmal des Anspruches 1 gelöst. Da die Arretiersperre nämlich in einem vom Schwenklager weit beabstandeten Bereich der Sitzwannenaußenseite innerhalb des Überdeckungsbereichs von Haltegestell und Sitzwanne zwischen diesen angeordnet ist, ist der Hebelarm zwischen Drehlager und Arretiersperre im Gegensatz zu herkömmlichen Sitzen sehr lang. Die bei einem eventuellen Aufprall auftretenden Kräfte an der Arretiersperre sind somit geringer, ein Bruch des Arretiergliedes und eine damit verbundene Schleuderbewegung des Sitzes mit hohen auf den Säugling wirkenden Beschleunigungskräften wird damit vermieden. Damit genügt auch eine einzige Arretiersperre vollauf, wodurch eine Einhandbedienung zur Neigungsverstellung ermöglicht wird.

Gemäß dem kennzeichnenden Merkmal des Anspruches 2 ist die Arretiersperre quasi am Scheitel zwischen den V-förmigen Schenkeln der Rücken- und Beinauflage angeordnet. Damit ist ein größtmöglichster Hebelarm gewährleistet. Insgesamt werden ausgewogene Kräfteverhältnisse im Bereich der Arretiersperre erzielt.

Gemäß den kennzeichnenden Merkmalen der Ansprüche 3 und 4 ist gewährleistet, daß sich die zwischen Arretierglied und Verrastausnehmungen wirkenden Kräfte bei verschiedenen Schwenkstellungen der Sitzwanne nicht erheblich voneinander unterscheiden. Dies ist für die Konstruktionsauslegung von Arretierglied und Arretiergegenlager von Vorteil.

Durch die in den kennzeichnenden Merkmalen der Ansprüche 5 und 6 beschriebenen Hebelkonstruktionen wird eine sehr leichtgängige Bedienbarkeit der Arretiersperre erzielt. Die Bedienungsfreundlichkeit wird durch das kennzeichnende Merkmal des Anspruches 7 weiter gesteigert, da der an Fuß- oder/und Kopfende der Sitzwanne angebrachte Entarretierhebel durch seine exponierte Lage leicht erreichbar ist.

Die kennzeichnenden Merkmale der Ansprüche 8-10 beschreiben eine besonders vorteilhafte Konstruktionsweise für die Arretiersperre und ihre Betätigung. In der Summe der Vorteile ist die Arretiersperre leichtgängig und mit einer Hand von jedem Sitzende her zu bedienen. Die Entarretierhebel sind durch ihre räumliche Anordnung gut zugänglich, wobei von besonderem Vorteil ist, daß die Auslösung der Arretiersperre jeweils nur von einem der beiden Entarretierhebel zu bewerkstelligen ist. Die Sitzwanne kann dadurch sowohl vom Fuß- als auch vom Kopfende her verstellt werden, ein unbequemes Bedienen wird dadurch vermieden. Trotz der beschriebenen Benutzerfreundlichkeit weist die Konstruktion ein hohes Maß an Stabilität und damit an Sicherheit im Einsatz auf.

Durch die im Kennzeichnungsmerkmal des Anspruches 11 beschriebene Kufenbauweise des Haltegestells wird eine verwindungssteife, stabile Halterung der Sitzwanne erreicht. Durch die Gleichebigkeit von Quertraverse und Geradholmen entsprechend dem Anspruch 12 weist das Haltegestell des Sicherheitssitzes eine große Aufstandsfläche auf. Beispielsweise im Einsatz in einem Kraftfahrzeug drückt sich das Haltegestell damit weniger in die Polsterung ein, diese wird geschont und ein Beschädigen vermieden. Gleichzeitig dienen diese Quertraversen gemäß dem Kennzeichnungsmerkmal des Anspruches 13 als Träger für das Arretiergegenlager.

Durch das Kennzeichnungsmerkmal des Anspruches 14 wird eine besonders stabile, verwindungssteife Konstruktion des Haltegestells bei gleichzeitig vergrößerter Aufstandsfläche erzielt.

An dieser Stelle ist anzumerken, daß die beschriebenen Standkufen als Verbindungselemente zu verschiedenen Untergestellen dienen können. Dem Sicherheitssitz werden dadurch multifunktionale Anwendungsmöglichkeiten gegeben, beispielsweise kann er als Aufsatz auf ein Fahrgestell dienen und wird damit zum Kinderwagen. Auch als Sitz auf einem Hochgestell ist er denkbar, er kann dann z. B. als Baby-Hochstuhl zum Beistellen an Eßtische dienen.

Durch das kennzeichnende Merkmal des Anspruches 15 wird ein weiterer Anwendungsvorteil erzielt. Beispielsweise kann der Sicherheitssitz auf der Rücksitzbank eines Automobils durch Einklemmen der Standkufen zwischen Sitzbanklehne und Rückenlehne des Vordersitzes zusätzlich fixiert werden, ohne dabei die Schwenkbarkeit der Sitzwanne einzubüßen.

Sicherheitssitze nach den in Anspruch 16 und 17 beschriebenen Konstruktionsmerkmalen haben den Vorteil, daß bei einem Unfall zusätzlich durch die gebogenen Geradholmendenpaare ein Hebelarm wirksam wird, der in Verbindung mit der Polsterung Energie absorbieren kann.

Die Schutzwirkung des Sicherheitssitzes bei einem Unfall wird durch die Ausbildung des Erfindungsgegenstandes gemäß den Ansprüchen 18-21 weiter verbessert. Die hochgezogene Quertraverse zur Verbindung der gegenüberliegenden Enden der Geradholme schafft eine Prallfläche, die beim Transport an der Rücklehne eines Autositzes anliegt. Bei einem Heckaufprall stützt sich die gesamte Sitzkonstruktion über diese Prallfläche ab, was einerseits ein sicheres Verharren des Sitzes gewährleistet, andererseits kann durch eine gezielte Deformation dieser Quertraverse kinetische Energie ähnlich wie bei der Knautschzone eines Autos verzehrt werden. Die Quertraverse ist insgesamt also nicht mehr geradlinig, sondern im wesentlichen halbkreisförmig gebogen. Eine besonders stabile Konstruktion wird dabei gemäß Anspruch 21 dadurch geschaffen, daß eine etwa halbkreisförmige Platte als Quertraverse dient.

Besonderes Augenmerk verdienen die nebengeordneten Ansprüche 23-29. Durch die beschriebenen, entsprechend verschieden angeordneten Gurtführungen wird eine universelle Einsetzbarkeit des Sicherheitssitzes erzielt. Dieser kann sowohl in oder gegen die Fahrtrichtung, als auch quer dazu im Fahrzeug mittels des dort vorhandenen Anschnallgurtes befestigt werden. In Ausführungsbeispielen sind diese verschiedenen Möglichkeiten zum besseren Verständnis dargestellt. Diese unterschiedlichen Möglichkeiten können dabei auch bei Sicherheitssitzen realisiert werden, die die in den vorstehend erläuterten Ansprüchen 1-22 beschriebenen Merkmale nicht notwendigerweise enthalten.

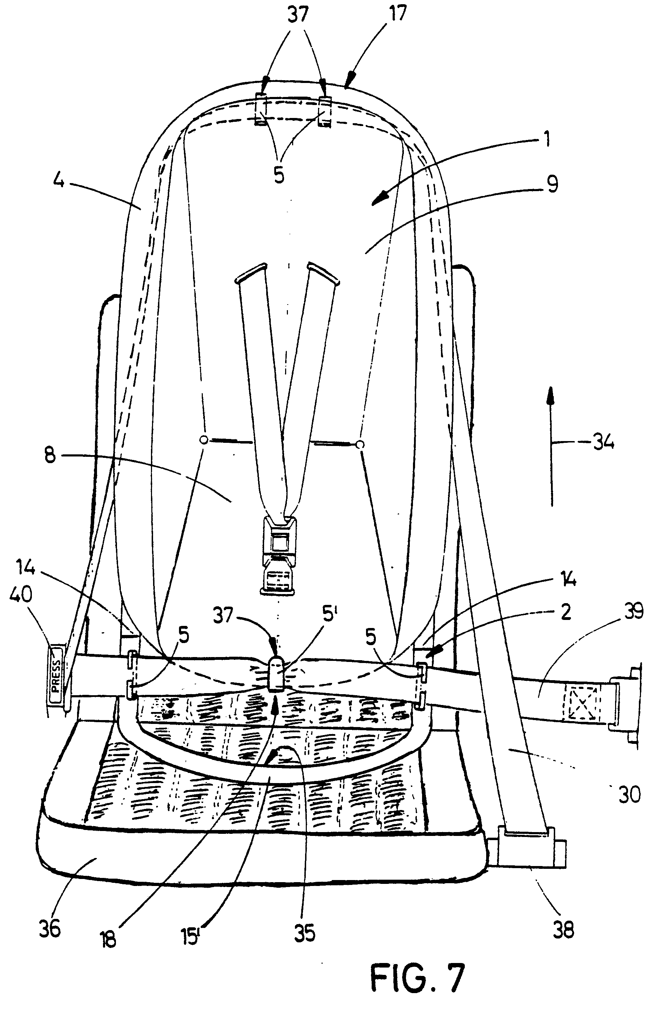

Durch das Kennzeichnungsmerkmal des Anspruches 23 ist gewährleistet, daß durch den Fahrzeuggurt bei der Fixierung kein Drehmoment auf die Sitzwanne ausgeübt wird. Deren leichte Verstellbarkeit wird nicht beeinträchtigt. Nach Anspruch 24 sind die Gurtführungen so gestaltet, daß sie im Gegensatz zu den Führungen an herkömmlichen Sitzen in zwei Richtungen führend wirken können. Für eine beste Führungswirkung ist die Ausbildung als Rechteckröhre vorteilhaft. Für die Gurtführungen an den Enden der Standkufen (siehe Fig. 7) ist es jedoch auch denkbar, nur einen flach rechteckförmig gebogenen, starken Metalldraht zu verwenden, dessen beide Enden aufeinander zuweisend mit Abstand gegenüberliegen.

Eine besonders vorteilhafte Weiterbildung des Erfindungsgegenstandes ist durch eine Kombination der kennzeichnenden Merkmale der Ansprüche 17 und 25 gegeben. Auf der Oberseite von gegenüberliegenden, in einem stumpfen Winkel zur Standebene des Sitzes nach oben abgebogenen Geradholmenden wird jeweils eine Gurtführung angebracht. Dadurch ergeben sich durch Anlage des Dreipunktgurtes an beiden Rohren weitere Fixierungspunkte für das Haltegestell. Die Abbiegung der Geradholmenden und die damit verbundene Erhöhung der Gurtführungslage gewährleistet, daß die Anlagepunkte des Dreipunktgurtes am Haltegestell immer höher als das Gurtschloß des Sitzes liegen. Dies kommt einer sauberen Gurtführung und einer sicheren Befestigung zugute. Ein hoher Bedienungskomfort wird durch die Ausbildung der Gurtführungen gemäß. Anspruch 24 erzielt.

Die einfachen Gurtführungsbügel gemäß den Ansprüchen 26-29 sind für den Einsatz des Sicherheitssitzes entgegen der Fahrtrichtung gedacht. Durch ihre spezielle, nach oben offene Formgebung ist ein leichtes Einführen des Sicherheitsgurtes in die Führungsbügel möglich. Trotzdem wird der Gurt bei einem Unfall sicher festgehalten, da die Offenseite der Gurtführungen nach oben gerichtet liegt, wogegen die durch den Gurt auf die Gurtführungen ausgeübten Kräfte bei einem Aufprall des Wagens auf ein Hindernis nach unten gerichtet sind.

Durch einen alternativen Gurtverlauf über die im Kopf- und Fußbereich des Sitzes angeordneten Gurtführungen (gemäß Fig. 7) ist im Notfall die Befreiung des Säuglings aus dem Sitz schneller zu bewerkstelligen, da der Deipunktgurt des Wagens nicht über, sondern nur um die Sitzwanne verläuft. Es braucht nur die Haltevorrichtung (Gurt, Prallplatte, Haltenetz) des Sitzes selbst gelöst werden.

Gemäß dem kennzeichnenden Merkmal des Anspruches 30 wird eine besonders hohe Schutzwirkung für den Säugling erreicht. Durch die umlaufende Polsterwulst entsprechend dem Anspruch 31 wird das Verletzungsrisiko bei einem Unfall weiter herabgesetzt.

Durch das Kennzeichnungsmerkmal des Anspruches 32 ist der Sicherheitssitz besonders einfach hochzuheben und zu tragen. Damit die beschriebenen Tragriemen während des Einsatzes, beispielsweise in einem Automobil, nicht stören, sind sie - wie in Anspruch 33 beschrieben - über den Abschlußrand der Sitzwanne auf deren Außenseite hinüberziehbar. Dort liegen sie an der Außenseite gespannt an.

Die Kennzeichnungsmerkmale der Ansprüche 34-36 beschäftigen sich mit besonders sicheren und praktischen Anschnallvorrichtungen für den Säugling. Eine Prallplatte bzw. ein Haltenetz mindert die bei einem Unfall auf den Körper wirkenden Druckkräfte erheblich. Ein Sitzsack als Anschnallvorrichtung hat zusätzlich den praktischen Vorteil, daß er sowohl Schutz bei einem Unfall, als auch - was bei einem Säugling besonders wichtig ist - Schutz vor Kälte bietet.

Der Beschreibung ist zusammenfassend zu entnehmen, daß der erfindungsgemäße Sicherheitssitz zur Beförderung von Säuglingen und Kleinstkindern in Fahrzeugen gegenüber Sitzen der herkömmlichen Art mannigfaltige Vorteile aufweist. Er kann universell in Fahrtrichtung, gegen die Fahrtrichtung und quer dazu mittels der entsprechenden Gurtführungen fixiert werden. Seine Sitzwanne ist durch die außenliegenden Entarretierhebel einfach, leichtgängig und mit einer Hand zu verstellen. Durch die weit nach außen gezogenen Standkufen ist die Beweglichkeit dabei immer gewährleistet. Durch die weit von der Schwenkachse entfernt angeordnete Arretiersperre ergeben sich für die Verrastung besonders günstige Hebelverhältnisse, wodurch der Sitz die bei einem Unfall auftretenden Kräfte besonders gut aufnehmen kann. Dadurch wird ein wesentlicher Sicherheitsvorsprung gegenüber herkömmlichen Sitzen erzielt.

Die Erfindung wird in einem Ausführungsbeispiel anhand der beiliegenden Figuren näher erläutert. Es zeigen:

Fig. 1 eine perspektivische Seitenansicht eines Sicherheitssitzes,

Fig. 2 eine Seitenansicht analog Fig. 1 mit abgebogenen Geradholmendenpaaren der Standkufen,

Fig. 3 einen Detail-Längsschnitt durch einen Sicherheitssitz zur Darstellung der Baugruppe Entarretierhebel-Betätigungsstange-Arretiersperre,

Fig. 4 einen Detail-Längsschnitt durch die Arretiersperre und das Arretiergegenlager,

Fig. 5 eine schematische, perspektivische Seitenansicht eines Sicherheitssitzes mit schemenhaft dargestelltem Gurtverlauf für verschiedene Einbaupositionen,

Fig. 6 eine schematische Seitenansicht eines Sicherheitssitzes mit Prallfläche gemäß Anspruch 18 (Einbaulage entgegengesetzt zur Fahrtrichtung, der Gurt wurde aufgrund der Übersichtlichkeit nicht dargestellt),

Fig. 7 eine Draufsicht auf einen Sicherheitssitz aus Pfeilrichtung VII gemäß Fig. 6 zur Darstellung des Gurtverlaufes bei Gurtführungen nach den Ansprüchen 26-29,

Fig. 8 eine perspektivische Seitenansicht eines Sicherheitssitzes in Einbaustellung analog Fig. 7 (ohne Gurtführungen 5 auf den Geradholmen).

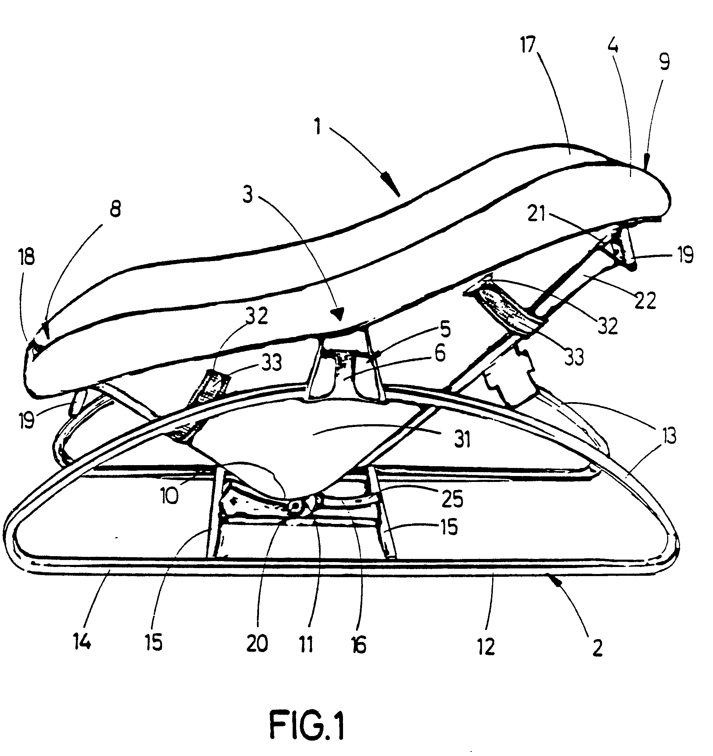

Gemäß Fig. 1 besteht der Sicherheitssitz aus einer Sitzwanne 1, die schwenkbar in einem Haltegestell 2 gelagert ist  Das Schenklager 3 befindet sich dabei nicht sichtbar unter dem umlaufenden, gepolsterten Abschlußrand 4. Quasi lagegleich damit ist die Gurtführung 5 angebracht, durch deren Schlitz 6 der Beckenteil eines Dreipunkt-Automatik-Sicherheitsgurtes oder ein Beckengurt 7 eingeführt werden kann. Im Übergangsbereich zwischen Beinauflage 8 und Rückenauflage 9 ist an der Außenseite des Sitzwannenbodens 10 die Arretiersperre 11 angeordnet.

Das Haltegestell 2 besteht aus zwei Standkufen 12, die aus dem Bogenholm 13 und dem Geradholm 14 zusammengesetzt sind. Die beiden Geradholme 14 sind durch Quertraversen 15 verbunden, zwischen denen das Arretiergegenlager 16 sitzt. Aus der Figur ist dabei ersichtlich, daß die Unterseiten von Geradholmen 14, Quertraversen 15 und Arretiergegenlager 16 in einer Ebene liegen.

Zur Betätigung der Arretiersperre sind am Kopf- 17 und Fußende 18 die beiden einarmigen Entarretierhebel 19 angelenkt. Diese stehen mit dem Rasthebel 20 der Arretiersperre 11 jeweils über eine Betätigungsstange 21 in Verbindung, die unter den Abdeckungen 22 verlaufen.

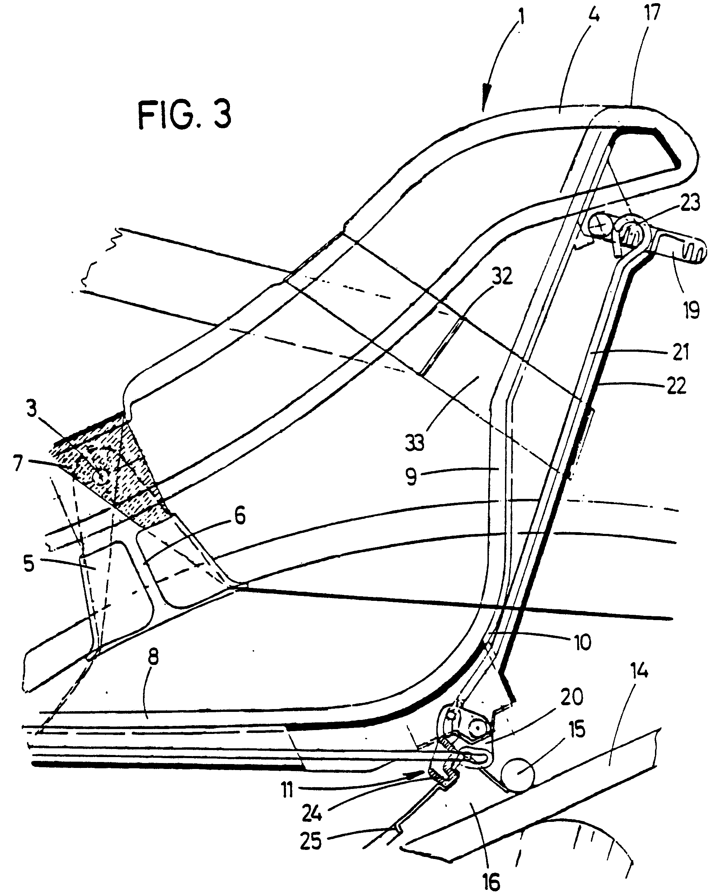

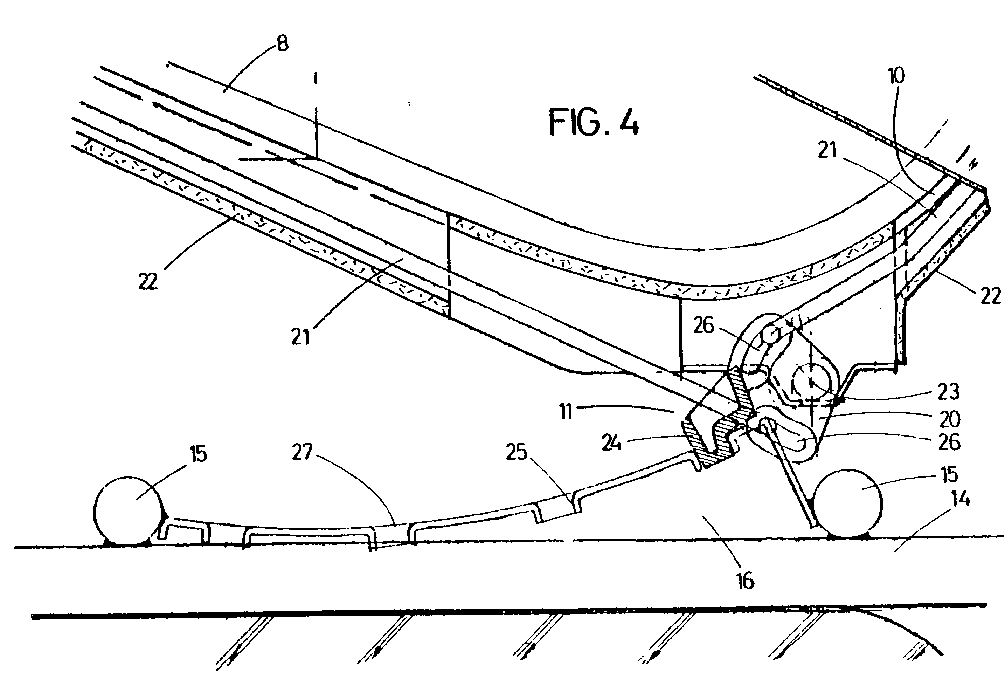

Der genaue Konstruktionsaufbau ist aus Fig. 3 ersichtlich. Der am Kopfende 17 der Sitzwanne angelenkte Entarretierhebel 19 enthält ein Drehlager 23 zur Aufnahme der Betätigungsstange 21. Diese verläuft im wesentlichen parallel zur Außenseite der Rückenauflage 9 der Sitzwanne 1 hinunter zum Rasthebel 20. An diesem Hebel ist das Arretierglied 24 angebracht, das durch Zug am Entarretierhebel nach oben außer Eingriff mit der Verrastausnehmung 25 im Arretiergegenlager 16 bringbar ist. Gegengleich zur ersten Betätigungsstange 21 ist die mit dem Entarretierhebel 19 am Fußende 18 der Sitzwanne verbundene zweite Betätigungsstange 21 angeordnet. Wie aus Fig. 4 besonders deutlich wird, münden beide Betätigungsstangen 21 jeweils in einem Langloch 26, wobei beide Stangenenden in Verraststellung des Arretiergliedes an den zum jeweiligen Entarretierhebel 19 hinweisenden Langlochenden anliegen. Wird ein Entarretierhebel angezogen, wird der Rasthebel 20 gedreht, wobei das Ende der jeweils anderen Betätigungsstange 21 sich im Langloch 26 verschieben kann. Dadurch sind die beiden Betätigungsstangen 21 und damit die Entarretierhebel 19 bewegungsunabhängig voneinander.

Die Verrastausnehmungen 25 zur Aufnahme des Arretiergliedes 24 liegen auf dem Kreisbogen 27, der etwa den Radius des Abstandes von Arretierglied 24 zum Schwenklager 3 aufweist.

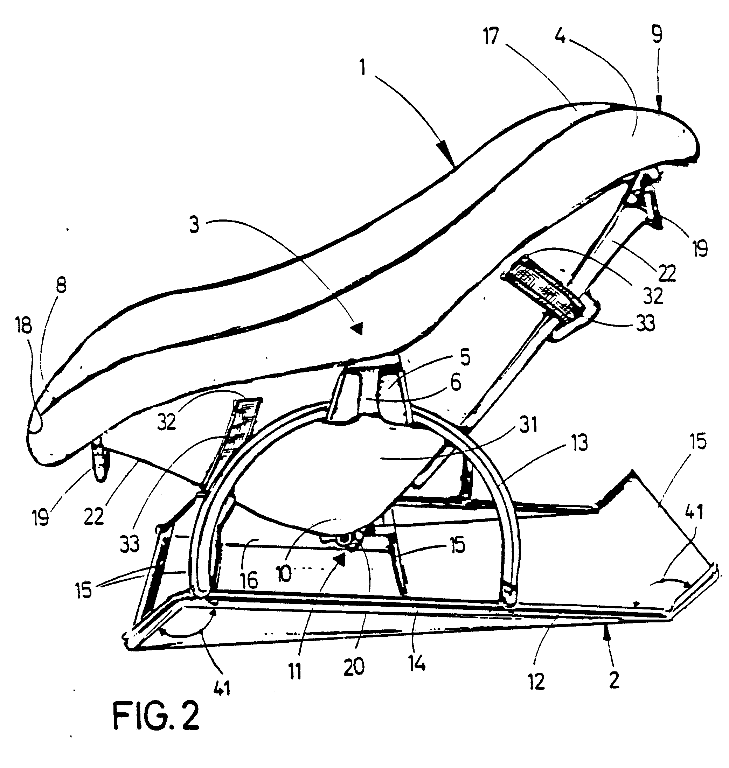

Fig. 2 zeigt eine Ausführungsform des Sicherheitssitzes mit alternativen Standkufenenden. Diese sind nach unten bzw. oben in einem stumpfen Winkel 41 abgebogen und mittels weiterer Quertraversen 15 verbunden.

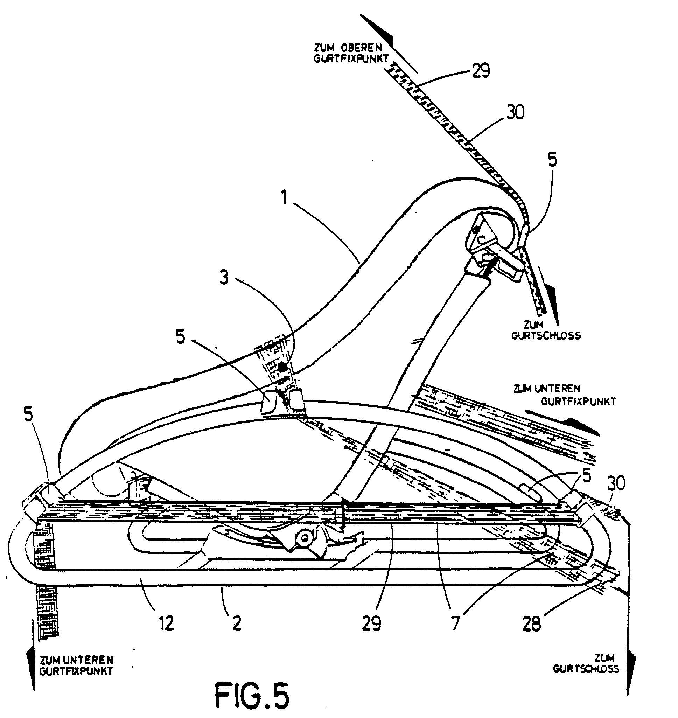

In Fig. 5 sind verschiedene mögliche Gurtverlaufsrichtungen dargestellt. Durch die alternativ oder kumulativ angebrachten Gurtführungen 5 sind universelle Einbaumöglichkeiten des Sicherheitssitzes auf einem Fahrzeugsitz möglich. Beispielsweise ist Gurtverlauf 28 bei Einbau des Sicherheitssitzes mit Blickrichtung des Säuglings in Fahrtrichtung gegeben. Soll der Sicherheitssitz quer zur Fahrtrichtung eingebaut werden, kommen die an den Standkufen 12 angebrachten Gurtführungen 5 zum Einsatz, wobei der Gurt 30 gemäß dem Gurtverlauf 29 geführt ist. Je nach Einbaurichtung wird dabei der Brustteil eines Automatik-Dreipunkt-Gurtes 30 zur Fixierung der Sitzwanne benützt (Gurtverlauf 29), bzw. läuft er einfach entlang der Rücksitzlehne eines Fahrzeugsitzes nach oben (Gurtverlauf 28).

Gemäß Fig. 1 und Fig. 2 sind in den Seitenwänden 31 der Sitzwanne 1 Aufnahmeschlitze 32 für die Enden von Tragriemen 33 angebracht. In der in den Fig. 1 und 2 dargestellten Inaktivstellung der Tragriemen liegen diese auf der Außenwand der Sitzwanne 1 gespannt an. Zur Anwendung werden sie über den Abschlußrand 4 gezogen und verlaufen dann über die Offenseite der Sitzwanne 1.

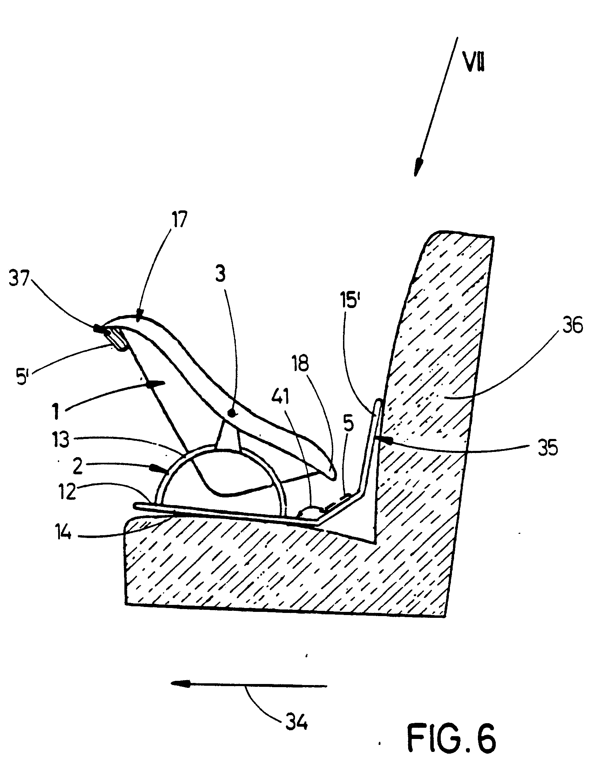

Eine sicherheitstechnisch besonders vorteilhafte Ausführung des Haltegestelles 2 ist in Fig. 6 an einem Einbaubeispiel für den Sicherheitssitz entgegen zur Fahrtrichtung 34 dargestellt. Der Übersichtlichkeit halber wurde auf die Darstellung des Gurtverlaufes verzichtet. Die fußendenseitigen Geradholmendenpaare sind in einem stumpfen Winkel 41 nach oben abgebogen. Auf ihrer Oberseite sind die etwa rechteckförmigen Gurtführungen 5 befestigt. Abweichend von der auf dem Schwenklager 3 sitzenden Gurtführung können diese aus einem starken Metalldraht gebogen sein, ohne an Sicherheit einzubüßen. Die Quertraverse 15' zur Verbindung der beiden gegenüberliegenden Geradholmenden ist so ausgebildet, daß sie sich aus der Ebene der Standkufen 12 im wesentlichen vertikal nach oben, bogenförmig erstreckt. Ihr höchster Punkt liegt dabei - auf die Standebene bezogen - höher als das Schwenklager 3. Durch diese spezielle Formgebung für die Quertraverse 15' wird eine Prallfläche 35 geschaffen, die eine Abstützung des gesamten Haltegestelles 2 gegen die Sitzlehne 36 beispielsweise bei einem Heckaufprall ermöglicht. Durch eine vorauskalkulierte Deformation der Quertraverse 15' kann wie bei einer Knautschzone eines Kraftfahrzeuges kinetische Energie verzehrt werden. Im Detail kann die Quertraverse 15' entweder bügelartig - wie etwa der Bogenholm 13 - ausgebildet sein, eine besonders stabile Konstruktion wird jedoch durch Verwendung einer halbkreisförmigen Prallplatte geschaffen.

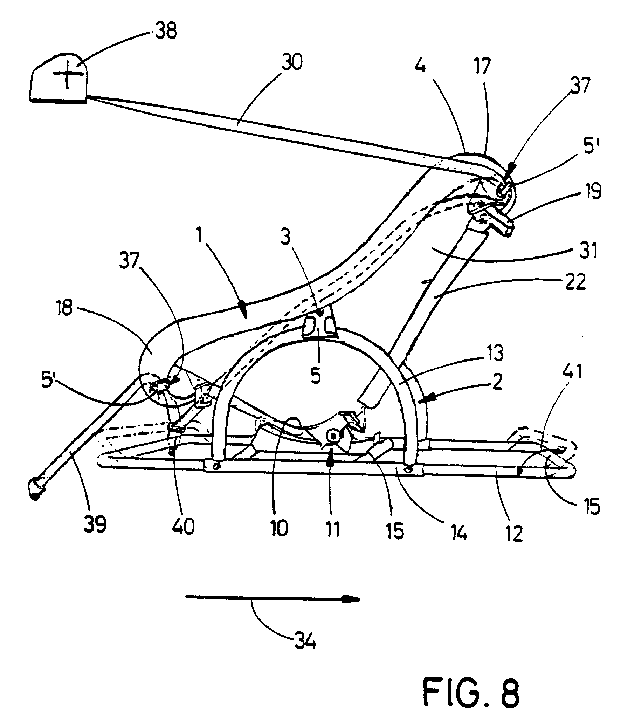

Auf welche Weise der Sicherheitssitz im praktischen Einsatz mit Hilfe der Dreipunkt-Automatik-Sicherheitsgurte in Einbaustellung gehalten wird, ist in den Fig. 7 und 8 dargestellt. Fig. 7 entspricht einer Draufsicht auf den erfindungsgemäßen Sicherheitssitz in Pfeilrichtung VII gemäß Fig. 6. Am Kopf- 17 bzw. Fußende 18 der Sitzwanne 1 sind die bügelartigen Gurtführungen 5' befestigt. Für eine weiter verbesserte Führung sind im Kopfbereich dabei zwei Gurtführungen 5' vorgesehen. Diese sind im wesentlichen vertikal angeordnet und einseitig offen. Die Offenseite 37 liegt dabei oben, von dieser Richtung her sind die Gurte in die Gurtführungen 5' einschiebbar. Der Gurtverlauf ist wie folgt: Vom Gurtroller 38 wird der Dreipunktgurt 30 durch die beiden am Kopfende 17 der Sitzwanne 1 liegenden Gurtführungen 5' gezogen. Der Beckenteil 39 verläuft durch die am Fußende 18 der Sitzwanne 1 liegende Gurtführung 5' und die beiden Gurtführungen 5 auf der Oberseite der nach oben abgebogenen Enden der Geradholme 14. Durch das Verriegeln des Gurtschlosses 40 ist der Sicherheitssitz insbesondere bei einem Unfall fest auf dem Autositz gehalten. Durch den Blockiermechanismus des Dreipunktgurtes 30 werden die in Fahrtrichtung 34 wirkenden Beschleunigungskräfte über den Gurt aufgenommen. Die bei einem Heckaufprall auftretenden Kräfte entgegen der Fahrtrichtung werden über das Haltegestell 2 im wesentlichen auf die Sitzlehne 36 übertragen und damit zunichte gemacht.

In Fig. 7 wird außerdem besonders deutlich, daß durch den dargestellten Gurtverlauf der Gurt an keiner Stelle über dem Säugling verläuft. Dadurch kann der Insasse im Notfall besonders schnell herausgenommen werden, es braucht dazu nur die Haltevorrichtung (in dieser Fig. ein Gurt) des Sitzes selbst geöffnet werden. Ein umständliches Suchen und Öffnen des Gurtschlosses 40 kann entfallen.

## Patentansprüche

1. Sicherheitssitz zur Beförderung von Säuglingen und Kleinstkindern in Fahrzeugen mit
- einem Haltegestell (2),
- einer darin um eine in ihrer Querrichtung liegende Achse schwenkbar gelagerten, in verschiedenen Schwenkstellungen gegenüber dem Haltegestell (2) arretierbaren Sitzwanne (1),
- mindestens einer Gurtführung (5) zur Aufnahme eines Dreipunkt-Automatik-Sicherheitsgurtes (30) oder eines Beckengurtes, dadurch gekennzeichnet, daß eine Arretiersperre (11)
- zur Erzielung eines langen Hebelarms der Sperrwirkung in einem vom Schwenklager (3) weit beabstandeten Bereich der den Boden (10) der Sitzwanne (1) bildenden Sitzwannenaußenseite innerhalb des Überdeckungsbereichs von Haltegestell (2) und Sitzwanne (1) zwischen diesen angeordnet ist und

- ein von Hand betätigbares Arretierglied (24) enthält, das in den Bereich des Haltegestells (2) überführbar und mit dem Haltegestell (2) in Eingriff bringbar ist.

2. Sicherheitssitz nach Anspruch 1, <u>dadurch gekennzeichnet</u> daß

- die Sitzwanne (1) im Längsschnitt etwa V-förmig mit im wesentlichen senkrecht zueinander stehenden V-Schenkeln zur Rücken- und Beinauflage ausgebildet ist und

- die Arretiersperre (11) im wesentlichen mittig an der den Gesäßbereich des Sitzes umfassenden Außenseite des Wannenbodens (10) im abgerundeten Übergangsbereich zwischen Rückenauflagebereich (9) und Beinauflagebereich (8) angeordnet ist.

3. Sicherheitssitz nach Anspruch 1 und/oder 2, <u>dadurch gekennzeichnet, daß das Haltegestell (2) ein der Arretiersperre (11) gegenüberliegendes Arretiergegenlager (16) mit den gewünschten Schwenkstellungen entsprechenden Verrastausnehmungen (25) für das Arretierglied (24) aufweist.

4. Sicherheitssitz nach Anspruch 3, <u>dadurch gekennzeichnet, daß die Verrastausnehmungen (25) im Arretiergegenlager (16) auf einem um die Schwenkachse verlaufenden Kreisbogen (27) mit einem etwa dem Abstand des Arretiergliedes (24) vom Schwenklager (3) entsprechenden Radius angeordnet sind.

5. Sicherheitssitz nach mindestens einem der Ansprüche 1 bis 4, <u>dadurch gekennzeichnet, daß die Arretiersperre (11) einen Rasthebel (20) aufweist, auf dem das Arretierglied (24) sitzt.

6. Sicherheitssitz nach Anspruch 5, <u>dadurch gekennzeichnet, daß der Rasthebel (20) durch mindestens einen Entarretierhebel (19) betätigbar ist.

7. Sicherheitssitz nach Anspruch 6, <u>dadurch gekennzeichnet, daß jeweils am Fuß- (18) oder/und Kopfende (17) der Sitzwanne (1) ein Entarretierhebel (19) angeordnet ist.

8. Sicherheitssitz nach Anspruch 6 oder 7, <u>dadurch gekennzeichnet, daß die Arretiersperre (11) mittels des durch den Entarretierhebel (19) über ein Zugmittel (Betätigungsstange 21) betätigbaren Rasthebels (20) lösbar ist, wobei das Arretierglied (24) aus den am Arretiergegenlager (16) des Haltegestells (2) angebrachten Verrastausnehmungen (25) außer Eingriff bringbar ist.

9. Sicherheitssitz nach Anspruch 8, <u>dadurch gekennzeichnet, daß der Entarretierhebel (19) als einarmiger Hebel am Kopf- (17) und/oder Fußende (18) der Sitzwannenaußenseite schwenkbar angelenkt ist und ein Drehlager (23) zur Aufnahme des Zugmittels, insbesondere einer Betätigungsstange (21) aufweist.

10. Sicherheitssitz nach Anspruch 9, <u>dadurch gekennzeichnet, daß

- jeweils ein Entarretierhebel (19) am Kopf- (17) und Fußende (18) der Sitzwannenaußenseite angebracht ist,

- zwei Betätigungsstangen (21) mit ihrem einen Ende jeweils am Entarretierhebel (19) drehbar befestigt sind und

- der Rasthebel (20) als doppelarmiger Hebel ausgeführt ist, dessen Arme jeweils ein Langloch (26) zur längsgeführten Aufnahme der abgekröpften Entarretierhebel-abseitigen Enden der zwei Betätigungsstangen (21) enthalten, wodurch der Rasthebel (20) zur Entarretierung jeweils durch eine Betätigungsstange (21) zwar anziehbar, aber nicht wegdrückbar ist.

11. Sicherheitssitz nach mindestens einem der vorgenannten Ansprüche, <u>dadurch gekennzeichnet, daß das Haltegestell (2) in Längsrichtung der Sitzwanne (1) zwei mittels mindestens einer Quertraverse (15) verbundene, neben der Sitzwanne (1) liegende Standkufen (12) enthält.

12. Sicherheitssitz nach Anspruch 11, <u>dadurch gekennzeichnet, daß

- die Standkufen (12) jeweils aus einem Geradholm (14) und einem nach oben stehenden Bogenholm (13) insbesondere einstückig zusammengesetzt sind, wobei die Geradholme (14) die Standebene des Haltegestells (2) aufspannen, und

- mindestens eine Quertraverse (15) gleichebig mit der Standebene angeordnet ist.

13. Sicherheitssitz nach Anspruch 12, <u>dadurch gekennzeichnet, daß das Arretiergegenlager (16) mit den Verrastausnehmungen (25) zwischen zwei Quertraversen (15) etwa mittig in Längsrichtung des Haltegestells (2) befestigt ist.

14. Sicherheitssitz nach Anspruch 13, <u>dadurch gekennzeichnet, daß die Unterseite des Arretiergegenlagers (16) gleichebig mit den Quertraversen (15) und den Geradholmen (14) der Standkufen (12) angeordnet ist.

15. Sicherheitssitz nach mindestens einem der Ansprüche 11 bis 14, <u>dadurch gekennzeichnet, daß die Kufenenden des Haltegestells (2) in jeder Schwenkstellung der Sitzwanne (1) über deren in die Standebene projezierte Umrißfläche hinausragen.

16. Sicherheitssitz nach mindestens einem der Ansprüche 11 bis 15, <u>dadurch gekennzeichnet, daß die gegenüberliegenden Enden der Geradholme (14) mittels weiterer Quertraversen (15) verbunden sind.

17. Sicherheitssitz nach Anspruch 16, <u>dadurch gekennzeichnet, daß mindestens ein gegenüberliegendes Geradholmendenpaar in einem stumpfen Winkel zur Standebene des Sitzes nach unten oder oben abgebogen ist.

18. Sicherheitssitz nach Anspruch 16 oder 17, <u>dadurch gekennzeichnet, daß die gegenüberliegenden, vorzugsweise auf der Seite des Sitzwannen-Fußendes gelegenen Enden der Geradholme (14) mittels einer Quertraverse (15') verbunden sind, die außerhalb der Standebene vorzugsweise vertikal-bogenförmig verlaufend eine Prallfläche (35) bildet.

19. Sicherheitssitz nach Anspruch 18, <u>dadurch gekennzeichnet, daß der höchste Punkt der Quertraverse (15') bezogen auf die Standebene höher als das Schwenklager (3) der Sitzwanne (1) liegt.

20. Sicherheitssitz nach Anspruch 18 oder 19, dadurch gekennzeichnet, daß die Quertraverse (15') bügelförmig ausgebildet ist.

21. Sicherheitssitz nach Anspruch 18 oder 19, dadurch gekennzeichnet, daß die Quertraverse (15') plattenförmig ausgebildet ist.

22. Sicherheitssitz nach mindestens einem der vorgenannten Ansprüche, dadurch gekennzeichnet, daß das Schwenklager (3) im Bereich zwischen dem Abschlußrand (4) der Sitzwanne (1) und im wesentlichen des höchsten Punktes des Bogenholmes (13) liegt.

23. Sicherheitssitz insbesondere nach einem der vorgenannten Ansprüche, dadurch gekennzeichnet, daß je eine Gurtführung (5) senkrecht nach oben führend im wesentlichen lagegleich mit dem Schwenklager (3) an den Bogenholmen (13) der Standkufen (12) befestigt ist.

24. Sicherheitsitz nach Anspruch 23, dadurch gekennzeichnet, daß die Gurtführung (5) etwa die Form einer Rechteckröhre aufweist, deren außenliegende Seite im wesentlichen mittig durchgehend in Röhrenlängsrichtung geschlitzt ist.

25. Sicherheitssitz nach Anspruch 23 oder 24, dadurch gekennzeichnet daß kumulativ oder alternativ weitere Gurtführungen (5) insbesondere an den Bogenholmen (13) oder Geradholmen (14) im Bereich der Kufenenden befestigt sind.

26. Sicherheitssitz nach einem der vorgenannten Ansprüche, dadurch gekennzeichnet, daß eine oder mehrere Gurtführungen (5') an der Sitzwannenaußenseite am Kopf- (17) und/oder Fußende (18) der Sitzwanne (1) angeordnet sind.

27. Sicherheitssitz nach Anspruch 26, dadurch gekennzeichnet, daß die Gurtführungen (5') bügelartig ausgebildet sind.

28. Sicherheitssitz nach Anspruch 27, dadurch gekennzeichnet, daß die bügelartigen Gurtführungen (5') einseitig offen sind derart, daß der Gurt von der offenen Seite (37) her einschiebbar ist.

29. Sicherheitssitz nach Anspruch 28, dadurch gekennzeichnet, daß die Gurtführungen (5') im wesentlichen vertikal angeordnet sind und die Offenseite (37) jeweils oben liegt.

30. Sicherheitssitz nach mindestens einem der vorgenannten Ansprüche, dadurch gekennzeichnet, daß durch die hochgezogenen Seitenwände (31) der Sitzwanne (1) der Abschlußrand (4) etwa in einer Ebene liegend ausgebildet ist.

31. Sicherheitssitz nach Anspruch 30, dadurch gekennzeichnet, daß der Abschlußrand (4) als umlaufende Polsterwulst ausgeführt ist.

32. Sicherheitssitz nach einem der vorgenannten Ansprüche dadurch gekennzeichnet, daß in den beiden Seitenwänden (31) der Sitzwanne (1) im Kopf- und Fußbereich je zwei Aufnahmeschlitze (32) für zwei Tragriemen (33) angebracht sind, die in Aktivstellung über die Offenseite der Sitzwanne verlaufen und deren Enden jeweils in den quer gegenüberliegenden Aufnahmeschlitzen (32) befestigt sind.

33. Sicherheitssitz nach Anspruch 32, dadurch gekennzeichnet, daß die Tragriemen (33)
- ganz oder teilweise aus einem elastischen Werkstoff bestehen und
- durch Hinüberziehen über den Abschlußrand (4) in eine Inaktiv-Stellung bringbar sind, in der sie in gespanntem Zustand an der Außenseite der Sitzwanne (1) anliegend verlaufen.

34. Sicherheitssitz nach mindestens einem der vorgenannten Ansprüche, dadurch gekennzeichnet, daß eine Anschnallvorrichtung für den Säugling oder das Kleinstkind eine mit Gurtbändern befestigte Prallplatte enthält.

35. Sicherheitssitz nach mindestens einem der Ansprüche 1 bis 33, dadurch gekennzeichnet, daß die Anschnallvorrichtung ein Haltenetz enthält, das direkt an der Sitzwanne befestigbar ist.

36. Sicherheitssitz nach mindestens einem der Ansprüche 1 bis 3, dadurch gekennzeichnet, daß die Anschnallvorrichtung als ein den brustabwärtigen Körperbereich des Säuglings umschließender Sitzsack ausgebildet ist.

## Claims

1. Safety seat for transporting babies and infants in vehicles, having:- a holding frame (2); a seat bucket (1) which is mounted pivotably in the holding frame about an axis lying in its transverse direction and which is lockable relative to the holding frame (2) in different pivoting positions; and at least one belt guide (5) for receiving an automatic three-point safety belt (30) or a pelvic belt; characterized in that a locking catch (11) is arranged in a region of the outer face of the seat-bucket forming the bottom (10) of the seat bucket (1) which is within the region of overlap of the holding frame (2) and seat bucket (1) and between these and is far removed from the pivot bearing (3), in order to obtain a long lever arm for the catching effect; and in that the locking catch (11) includes a manually actuable locking member (24) which can be shifted into the region of the holding frame (2) and which can be engaged with the holding frame (2).

2. Safety seat according to Claim 1, characterized in that the seat bucket (1) is approximately V-shaped in longitudinal section with V-legs essentially perpendicular to one another for back support and leg support, and the locking catch (11) is arranged essentially centrally on the outer face of the bucket bottom (10) comprising the buttock region of the seat in the rounded transitional region between the back-support region (9) and the leg-support region (8).

3. Safety seat according to Claim 1 and/or 2, characterized in that the holding frame (2) has a locking abutment (16), located opposite the locking catch (11) and having engagement recesses (25) for the locking member (24) which correspond to the desired pivoting positions.

4. Safety seat according to Claim 3, characterized in that the engagement recesses (25) in the locking abutment (16) are arranged on an arc of a circle (27) extending about the pivot axis and having a radius corresponding approximately to the distance between the locking member (24) and the pivot bearing (3).

5. Safety seat according to at least one of Claims 1 to 4, characterized in that the locking catch (11) has a locking lever (20), on which the locking member (24) sits.

6. Safety seat according to Claim 5, characterized in that the locking lever (20) is actuable by means of at least one release lever (19).

7. Safety seat according to Claim 6, characterized in that a release lever (19) is arranged respectively at the foot end (18) and/or head end (17) of the seat bucket (1).

8. Safety seat according to Claim 6 or 7, characterrized in that the locking catch (11) is releasable by means of the locking lever (20) actuable by the release lever (19) via a pulling means, (actuating rod 21), the locking member (24) being disengageable from the engagement recesses (25) provided on the locking abutment (16) of the holding frame (2).

9. Safety seat according to Claim 8, characterized in that the release lever (19) is articulated pivotably, as a one-armed lever, on the head end (17) and/or foot end (18) of the outer face of the seat bucket and has a rotary bearing (23) for receiving the pulling means, especially an actuating rod (21).

10. Safety seat according to Claim 9, characterized in that a release lever (19) is attached respectively to the head end (17) and foot end (18) of the outer face of the seat bucket; in that two actuating rods (21) are fastened rotatably at one of their ends in each case to the release lever (19); and in that the locking lever (29) is designed as a two-armed lever, the arms of which each include a slot (26) for the longitudinally guided reception of the bent ends of the two actuating rods (21) remote from the release lever, as a result of which, for release purposes, the locking lever (20) can be pulled up by means of a respective actuating rod (21), but not pushed away.

11. Safety seat according to at least one of the preceding claims, characterized in that the holding frame (2) contains, in the longitudinal direction of the seat bucket (1), two standing skis connected by means of at least one crossmember (15) and located next to the seat bucket (1).

12. Safety seat according to Claim 11, characterized in that the standing skis (12) are each composed of a straight spar (14) and an upwardly directed curved spar (13), especially integrally connected, the straight spars (14) determining the standing plane of the holding frame (2); and in that at least one crossmember (15) is arranged in the same plane as the standing plane.

13. Safety seat according to Claim 12, characterized in that the locking abutment (16) with the engagement recesses (25) is fastened between two crossmembers (15) approximately centrally in the longitudinal direction of the holding frame (2).

14. Safety seat according to Claim 13, characterized in that the underside of the locking abutment (16) is arranged in the same plane as the crossmembers (15) and the straight spars (14) of the standing skis (12).

15. Safety seat according to at least one of Claims 11 to 14, characterized in that, in each pivoting position of the seat bucket (1), the ski ends of the holding frame (2) reach beyond the contour surface of the seat bucket (1) projected in the standing plane.

16. Safety seat according to at least one of Claims 11 to 15, characterized in that the opposite ends of the straight spars (14) are connected by means of further crossmembers (15).

17. Safety seat according to Claim 16, characterized in that at least one pair of straight-spar ends located opposite one another is bent downwards or upwards at an obtuse angle to the standing plane of the seat.

18. Safety seat according to Claim 16 or 17, characterized in that the opposite ends of the straight spars (14), preferably located on the side of the seat bucket foot end, are connected by means of a crossmember (15') which extends outside the standing plane, preferably extending vertically and arcuately, forms a rebound surface (35).

19. Safety seat according to Claim 18, characterized in that the highest point of the crossmember (15') in relation to the standing plane is higher than the pivot bearing (3) of the seat bucket (1).

20. Safety seat according to Claim 18 or 19, characterized in that the crossmember (15') is stirrup-shaped.

21. Safety seat according to Claim 18 or 19, characterized in that the crossmember (15') is plate-shaped.

22. Safety seat according to at least one of the preceding claims, characterized in that the pivot bearing (3) is located in the region between the closing edge (4) of the seat bucket (1) and essentially the highest point of the curved spar (13).

23. Safety seat especially according to one of the preceding claims, characterized in that a belt guide (5) leading vertically upwards is fastened, in essentially the same position as the pivot bearing (5), to each of the curved spars (13) of the standing skis (12).

24. Safety seat according to Claim 23, characterized in that the belt guide (5) has approximately the form of a rectangular tube, the outer face of which has an essentially central slit continuous in the longitudinal direction of the tube.

25. Safety seat according to Claim 23 or 24, characterized in that, additionally or alternatively, further belt guides (5) are fastened especially to the curved spars (13) or straight spars (14) in the region of the ski ends.

26. Safety seat according to one of the preceding claims, characterized in that one or more belt guides (5') are arranged on the outer face of the seat bucket at the head end (17) and/or foot end (18) of the seat bucket (1).

27. Safety seat according to Claim 26, characterized in that the belt guides (5') are of stirrup-like design.

28. Safety seat according to Claim 27, characterized in that the stirrup-like belt guides (5') are open on one side, in such a way that the belt can be inserted from the open side (37).

29. Safety seat according to Claim 28, characterized in that the belt guides (5') are arranged essentially vertically, and the open side (37) of each of them is at the top.

30. Safety seat according to at least one of the preceding claims, characterized in that the closing edge (4) is made to lie approximately in one plane as a result of the raised side walls (31) of the seat bucket (1).

31. Safety seat according to Claim 30, characterized in that the closing edge (4) is designed as an encircling padded bolster.

32. Safety seat according to one of the preceding claims, characterized in that two receiving slits (32) are provided in the head region and in the foot region of the two side walls (31) of the seat bucket (1), for two carrying straps (33) which, in the active position, extend over the open side of the seat bucket and the ends of which are fastened in the respective receiving slits (32) located transversely opposite one another.

33. Safety seat according to Claim 32, characterized in that the carrying straps (33) consist completely or partially of an elastic material and, by being pulled over the closing edge (4), can be brought into an inactive position, in which they rest tensioned against the outer face of the seat bucket (1).

34. Safety seat according to at least one of the preceding claims, characterized in that a buckling device for the baby or infant contains a rebound plate fastened by means of belt bands.

35. Safety seat according to at least one of Claims 1 to 33, characterized in that the buckling device contains a holding net which can be fastened directly to the seat bucket.

36. Safety seat according to at least one of Claims 1 to 3, characterized in that the buckling device is designed as a seat bag enclosing the region of the baby's body below the chest.

**Revendications**

1. Siège de sécurité pour le transport de bébés et de petits enfants dans des vehicules, comprenant
 - une monture de support (2),
 - une coquille formant siège (1) montée inclinable dans cette monture autour d'un axe transversal à la coquille, laquelle est susceptible d'être bloquée à différentes positions d'inclinaison par rapport à la monture (2), et
 - au moins un guide-sangle (5) pour la réception d'une ceinture de sécurité (30) à trois points de fixation et à enrouleur automatique, ou pour la réception d'une ceinture abdominale, caractérisé en ce que
 - un verrou (11) est disposé dans une zone du côté extérieur de la coquille formant le fond (10) de la coquille (1), à l'intérieur de la région de recouvrement mutuel de la monture (2) et de la coquille (1), entre celles-ci, ladite zone étant éloignée du palier d'inclinaison (3) en vue de l'obtention d'un long bras de levier pour l'effet de verrouillage, et
 - le verrou comporte un élément ou cliquet d'arrêt (24), manoeuvrable à la main, qui est disposé dans la région de la monture (2) et peut être amené en prise avec cette monture (2).

2. Siège selon la revendication 1, caractérisé en ce que
 - la coquille (1) possède, en coupe longitudinale, à peu près la forme d'un V, définie par des branches, faisant à peu près un angle droit l'une avec l'autre, dont l'une forme l'appui pour le dos et l'autre forme l'appui pour les jambes et
 - le verrou (11) est disposé à peu près au milieu du côté extérieur du fond (10) de la coquille, recevant le derrière, dans la partie de transition arrondie entre la partie (9) formant l'appui pour le dos et la partie (8) formant l'appui pour les jambes.

3. Siège selon la revendication 1 et/ou 2, caractérisé en ce que la monture (2) présente un élément cranté (16), situé en regard du verrou (11), qui présente les crans (25), correspondant aux positions désirées en inclinaison, pour le cliquet (24).

4. Siège selon la revendication 3, caractérisé en ce que les crans (25) sont disposés, sur l'élément cranté, suivant un arc de cercle (27) qui entoure l'axe d'inclinaison et dont le rayon correspond à peu près à la distance entre le cliquet (24) et le palier d'inclinaison (3).

5. Siège selon au moins une des revendications 1 à 4, caractérisé en ce que le verrou (11) présente un levier d'arrêt (20), sur lequel est disposé le cliquet (24).

6. Siège selon la revendication 5, caractérisé en ce que le levier d'arrêt (20) est manoeuvrable par au moins une manette de déblocage (19).

7. Siège selon la revendication 6, caractérisé en ce qu'une manette de déblocage (19) est prévue à l'extrémité formant le pied (18) de la coquille (1) et/ou à l'extrémité formant la tête (17) de la coquille (1).

8. Siège selon la revendication 6 ou 7, caractérisé en ce que le verrou (11) peut être déverrouillé au moyen du levier d'arrêt (20), actionné par l'intermédiaire d'un moyen de traction (tige de commande 21) par la manette de déblocage (19), ce qui permet de dégager le cliquet (24) de l'un des crans (2S) formés sur l'élément cranté (16) de la monture (2).

9. Siège selon la revendication 8, caractérisé en ce que la manette de déblocage (19) est réalisée comme un levier à un bras qui est articulé à l'extrémité de tête (17) et/ou l'extrémité de pied (18) sur le côté extérieur de la coquille et qui est pourvu d'une articulation (23) pour l'attache du moyen de traction, en particulier d'une tige de commande (21).

10. Siège selon la revendication 9, caractérisé en ce que
- une manette de déblocage (19) est disposée sur la tête (17) et sur le pied (18) du côté extérieur de la coquille,
- deux tiges de commande (21) sont chacune articulées par une extrémité sur une manette de déblocage (19) et
- le levier d'arrêt (20) est réalisé comme un levier à deux bras, presentant chacun un trou oblong (26) pour la réception et le guidage longitudinal de l'extrémité coudée, opposée à la manette de déblocage, de l'une des deux tiges de commande (21), si bien qu'une traction peut être exercée sur le levier d'arrêt (20), en vue du déblocage, au moyen de l'une des tiges de commande (21), mais qu'il ne peut pas être repoussé.

11. Siège selon au moins une des revendications précédentes, caractérisé en ce que la monture (2) contient deux parties latérales ou patins (12) situés à côté de la coquille (1) et s'étendant dans le sens de la longueur de celle-ci, qui sont reliés entre eux par au moins deux entretoises transversales (15).

12. Siège selon la revendication 11, caractérisé en ce que
- les parties latérales ou patins (12) contiennent chacun un élément droit ou iongeron (14) et un élément courbe (13) dirigé vers le haut, qui sont assemblés en particulier d'un seul tenant, les longerons (14) définissant le plan d'appui de la monture (2), et
- au moins une entretoise transversale (15) est disposée dans le plan d'appui.

13. Siège selon la revendication 12, caractérisé en ce que l'élément cranté (16, 25) est fixé entre deux entretoises transversales (15), à peu près au milieu dans le sens de la longueur de la monture (2).

14. Siège selon la revendication 13, caractérisé en ce que le dessous de l'élément cranté (16) est situé dans le même plan que le dessous des entretoises transversales (15) et des longerons (14) des parties latérales (12).

15. Siège selon au moins une des revendications 11 à 14, caractérisé en ce que les extrémités des parties latérales ou patins de la monture (2) dépassent, en toute position en inclinaison de la coquille (1), au-delà du pourtour de la surface de projection de la coquille dans le plan d'appui.

16. Siège selon au moins une des revendications 11 à 15, caractérisé en ce que les extrémités opposées des longerons (14) sont reliées entre elles par des entretoises transversales (15) supplémentaires.

17. Siège selon la revendication 16, caractérisé en ce que l'une au moins des paires opposées d'extrémités des longerons est recourbée vers le bas ou vers le haut sous un angle obtus par rapport au plan d'appui du siège.

18. Siège selon la revendication 16 ou 17, caractérisé en ce que deux extrémités du même côté des longerons (14), de préférence celles situées du côté du pied de la coquille, sont reliées entre elles par une entretoise transversale (15') qui s'étend de préférence verticalement et en courbe et qui forme une surface d'impact (35) à l'extérieur du plan d'appui.

19. Siège selon la revendication 18, caractérisé en ce que le point le plus haut de l'entretoise transversale (15'), par rapport au plan d'appui, dépasse en hauteur le palier d'inclinaison (3) de la coquille (1).

20. Siège selon la revendication 18 ou 19, caractérisé en ce que l'entretoise transversale (15') est réalisée en forme d'arceau.

21. Siège selon la revendication 18 ou 19, caractérisé en ce que l'entretoise transversale (15') est réalisée sous forme d'une plaque.

22. Siège selon au moins une des revendications précédentes, caractérisé en ce que le palier d'inclinaison (3) est situé dans la région comprise entre le bord (4) de la coquille (1) et le point à peu près le plus haut de l'élément courbe de la partie latérale (13) de la monture.

23. Siège de sécurité, en particulier selon une des revendications précédentes, caractérisé en ce qu'un guide-sangle (5), s'étendant perpendiculairement vers le haut, est fixé sensiblement à la même position que le palier d'inclinaison (3) sur les éléments courbes (13) des parties latérales (12).

24. Siège selon la revendication 23, caractérisé en ce que le guide-sangle (5) présente à peu près la forme d'un tube rectangulaire dont le côté extérieur est fendu de part en part, sensiglement au milieu, dans le sens de la longueur du tube.

25. Siège selon la revendication 23 ou 24, caractérisé en ce que d'autres guide-sangles (5) sont fixés, en plus ou en variante, en particulier sur les éléments courbes (13) ou sur les longerons (14) dans la région des extrémités des parties latérales de la monture.

26. Siège selon une des revendications précédentes, caractérisé en ce qu'un ou plusieurs guide-sangle (5') sont disposés, sur le côté extérieur de la coquille, à la tête (17) et/ou au pied (18) de la coquille (1).

27. Siège selon la revendication 26, caractérisé en ce que les guide-sangle (5') sont réalisés en forme d'étrier.

28. Siège selon la revendication 27, caractérisé en ce que les guide-sangle (5') en forme d'étrier sont ouverts d'un côté, de manière que la ceinture de sécurité puisse y être introduite par le côté ouvert (37).

29. Siège selon la revendication 28, caractérisé en ce que les guide-sangle (5') sont disposés à peu près verticalement et que leur côté ouvert (38) est situé en haut.

30. Siège selon au moins une des revendications précédentes, caractérisé en ce que la hauteur des parois latérales (31) de la coquille (1) est telle que le bord (4) de la coquille est situé à peu près dans un plan.

31. Siège selon la revendication 30, caractérisé en ce que le bord (4) est réalisé comme un bourrelet rembourré qui fait tout le tour de la coquille.

32. Siège selon une des revendications précédentes, caractérisé en ce que les deux parois latérales (31) de la coquille (1) présentent chacune, dans la région de la tête et dans la région du pied de la coquille, deux fentes (32) pour la réception de deux courrois (33) servant à soulever et à porter le siège, qui s'étendent du côté ouvert de la coquille en position d'utilisation et dont les extrémités sont fixées, pour chacune des courroies, en deux fentes (32) qui s'opposent transversalement à la coquille.

33. Siège selon la revendication 32, caractérisé en ce que les courroies (33)
- sont formées entièrement ou partiellement d'un matériau élastique, et
- sont susceptibles d'être amenées à une position de repos, en les tirant par-dessus le bord (4) de la coquille, position de repos où elles s'appliquent à l'état tendu contre le côté extérieur de la coquille (1).

34. Siège selon au moins une des revendications précédentes, caractérisé en ce qu'un dispositif d'attache pour le bébé ou le petit enfant contient une plaque d'impact fixée par des sangles.

35. Siège selon au moins une des revendications 1 à 33, caractérisé en ce que le dispositif d'attache comporte un filet de retenue qui est susceptible d'être fixé directement à la coquille.

36. Siège selon au moins une des revendications 1 à 33, caractérisé en ce que le dispositif d'attache est réalisé sous forme d'un sac qui entoure la partie au-dessous de la poitrine du corps du bébé.

FIG.1

FIG. 2

FIG. 3

FIG. 4

8

10

21

22

22

21

26

23

20

26

11

24

15

27

25

15

14

16

0 195 037

0 195 037

FIG.5

ZUM OBEREN GURTFIXPUNKT — 29

30

5

1

3

5

5

ZUM GURTSCHLOSS

ZUM UNTEREN GURTFIXPUNKT

5

30

12  2  29  7  28

ZUM UNTEREN GURTFIXPUNKT

ZUM GURTSCHLOSS

9

FIG.6

FIG. 7

FIG. 8